# EUROPEAN PATENT APPLICATION

(11) **EP 4 741 833 A1**
(43) Date of publication of application: **13.05.2026**
(21) Application number: 25213923.3
(22) Date of filing: 06.11.2025
(51) Int. Cl.: G01P 13/02, G01P 21/02, G01C 23/00, B64C 19/00

(54) **SYSTEM AND METHOD FOR MONITORING AN AIRCRAFT STATE**

(30) Priority: 07.11.2024 US 202463717363 P
(71) Applicant: Bombardier Inc., Dorval QC H4S1Y9 (CA)
(72) Inventor: TESSIER, Claude, Quebec, H4S 1Y9 (CA)
(74) Representative: HGF

(57) **Abstract**

Methods and systems for monitoring an aircraft state are provided. A method includes acquiring a primary value indicative of the aircraft state using a first sensor, and generating a preliminary synthetic value indicative of the aircraft state using other data acquired from a second sensor having a different operating principle than the first sensor. A corrective value to be applied to the preliminary synthetic value is computed using a computer-implemented model having been trained using machine learning and training data associating previous values of the other data with previous corrective values. The corrective value is applied to the preliminary synthetic value to generate a corrected synthetic value indicative of the aircraft state. The corrected synthetic value may be used as a basis to control the aircraft when the primary value is deemed unreliable or unavailable.

## Description

### TECHNICAL FIELD

The disclosure relates generally to aircraft, and more particularly to monitoring an aircraft state and to operating the aircraft.

### BACKGROUND

During flight of a modern fly-by-wire aircraft, an air data system of the aircraft generates safety-critical air data parameters that may be used by a flight control system of the aircraft, or that may be relied upon by a flight crew operating the aircraft. A traditional approach for providing the required reliability in such safety-critical system includes having a plurality of redundant measurement channels that work in parallel and that introduce design and manufacturing differences, and independence between the channels. In combination with failure detection and isolation logic, the redundancy provides data availability, and the dissimilarity provides data integrity. Unfortunately, this approach is penalizing in terms of weight, power demand, volume, installation effort, development complexity and cost. This approach also may not necessarily cover all common failure modes so the channels may be prone to similar causes of failure. Improvement is desirable.

### SUMMARY

In one aspect, the disclosure describes a method of operating an aircraft. The method comprises:
acquiring primary pneumatic data indicative of an aircraft state using a sensor interacting with an air stream outside of the aircraft during flight of the aircraft;
generating preliminary synthetic data indicative of the aircraft state using non-pneumatic data from a source other than the sensor;
generating a correction to be applied to the preliminary synthetic data using a computer-implemented model having been trained using machine learning and training data associating previous non-pneumatic data with previous corrections;
applying the correction to the preliminary synthetic data to generate corrected synthetic data indicative of the aircraft state;
determining that the primary pneumatic data is unreliable or unavailable; and
after determining that the primary pneumatic data is unreliable or unavailable, performing an action onboard the aircraft based on the corrected synthetic data.

The action may include controlling a flight control surface of the aircraft.

The method may comprise, before determining that the primary pneumatic data is unreliable or unavailable, controlling the flight control surface of the aircraft based on the primary pneumatic data.

The method may comprise comparing the primary pneumatic data to the corrected synthetic data when determining that the primary pneumatic data is unreliable or unavailable.

The action may include communicating the corrected synthetic data to a flight crew of the aircraft.

Applying the correction to the preliminary synthetic data may include adding a corrective value to a synthetic value of the preliminary synthetic data.

Applying the correction to the preliminary synthetic data may include multiplying a corrective value with a synthetic value of the preliminary synthetic data.

The method may comprise, before applying the correction to the preliminary synthetic data: determining that the corrective value exceeds a prescribed value; and adjusting the corrective value to the prescribed value.

Generating the correction may include: using the preliminary synthetic data to identify an operating point of the aircraft within an operating envelope of the aircraft; and computing the correction based on the operating point within the operating envelope.

The aircraft state may include an airspeed of the aircraft.

The aircraft state may include a Mach number at which the aircraft is travelling.

The aircraft state may include an angle of attack of the aircraft.

The aircraft state may include a side slip angle of the aircraft.

The aircraft state may include a dynamic pressure of air through which the aircraft is travelling.

The aircraft state may include a temperature of air through which the aircraft is travelling.

The aircraft state may include a pressure altitude of the aircraft.

The aircraft state may include a vertical speed of the aircraft.

The aircraft state may include an air density outside of the aircraft.

The aircraft state may include an aircraft weight.

Embodiments may include combinations of the above features.

In another aspect, the disclosure describes a method of monitoring an aircraft state. The method comprises:
acquiring a primary value indicative of the aircraft state using a first sensor;
computing a preliminary synthetic value indicative of the aircraft state using other data acquired via a second sensor having a different operating principle than the first sensor;
computing a corrective value to be applied to the preliminary synthetic value using a computer-implemented model having been trained using machine learning and training data associating previous values of the other data with previous corrective values; and
applying the corrective value to the preliminary synthetic value to generate a corrected synthetic value indicative of the aircraft state.

The primary value may be acquired while the first sensor is interacting with an air stream outside of an aircraft.

The computer-implemented model may include an artificial neural network. The method may include, before generating the preliminary synthetic value, training the artificial neural network using the previous values of the other data associated with the previous corrective values.

The method may comprise:
validating the primary value; and
after generating the preliminary synthetic value, further training the artificial neural network using the machine learning and a new corrective value that is based on a difference between the primary value and the preliminary synthetic value.

The method may comprise, before applying the corrective value to the preliminary synthetic value: determining that the corrective value exceeds a prescribed value; and reducing the corrective value.

Computing the corrective value may include: identifying an operating point of the aircraft within an operating envelope of the aircraft; and computing the corrective value based on the operating point of the aircraft within the operating envelope.

The aircraft state may include one or more of the following: an airspeed of the aircraft; a Mach number at which the aircraft is travelling; an angle of attack of the aircraft; a side slip angle of the aircraft; a dynamic pressure of air through which the aircraft is travelling; a temperature of air through which the aircraft is travelling; a pressure altitude of the aircraft; an air density; an aircraft weight; and a vertical speed of the aircraft.

The other data acquired via the second sensor may include a plurality of values acquired at different times.

Embodiments may include combinations of the above features.

In a further aspect, the disclosure describes a computer program product for operating an aircraft, the computer program product comprising a non-transitory computer readable storage medium having program code embodied therewith, the program code readable/executable by a computer, processor or logic circuit to perform a method disclosed herein.

In a further aspect, the disclosure describes an aircraft system comprising:
a sensor operable to acquire primary data indicative of an aircraft state;
one or more data processors; and
non-transitory machine-readable memory storing:
   an estimator function operable to generate preliminary synthetic data from other data acquired from a source other than the sensor;
   a corrector function operable to generate a correction to be applied to the preliminary synthetic data using a computer-implemented model trained using machine learning and training data associating previous other data with previous corrections; and
   instructions executable by the one or more data processors and configured to cause the one or more data processors to:
      use the estimator function to generate the preliminary synthetic data indicative of the aircraft state using the other data;
      use the corrector function to generate the correction to be applied to the preliminary synthetic data;
      apply the correction to the preliminary synthetic data to generate corrected synthetic data indicative of the aircraft state; and
      generate an output indicative of the corrected synthetic data.

The sensor may be configured to be exposed to a flow of air outside of an aircraft during operation of the sensor.

The sensor may be a first sensor. The system may include the source other than the sensor. The source other than the sensor may include a second sensor having a different operating principle than the first sensor.

The instructions may be configured to cause the one or more data processors to apply a limit to the correction before applying the correction to the preliminary synthetic data.

Applying the limit to the correction may include: determining that a magnitude of the correction exceeds a threshold; and reducing the magnitude of the correction.

The instructions may be configured to cause the one or more data processors to apply a filter to the correction before applying the correction to the preliminary synthetic data.

Computing the correction may include: identifying an operating point of the aircraft within an operating envelope of the aircraft; and generating the correction based on the operating point of the aircraft within the operating envelope.

The instructions may be configured to cause the one or more data processors to: determining that the primary data is unreliable or unavailable; and after determining that the primary data is unreliable or unavailable, commanding an action onboard the aircraft based on the corrected synthetic data.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a top plan view of an exemplary aircraft including an aircraft state monitoring system as described herein;
FIG. 2 is a schematic representation of an exemplary aircraft state monitoring system of the aircraft of FIG. 1 including an exemplary synthetic data system;
FIG. 3 is a schematic representation of an exemplary computer of the aircraft state monitoring system of FIG. 2;
FIG. 4 is a schematic representation of an exemplary flight control system of the aircraft of FIG. 1 including the aircraft state monitoring system of FIG. 2;
FIG. 5A is a schematic representation of another exemplary synthetic data system in an operating configuration;
FIG. 5B is a schematic representation of the synthetic data system of FIG. 5A in a training configuration;
FIG. 6 is a schematic representation of an exemplary corrector function implemented as an artificial neural network;
FIG. 7 is a flow diagram of a method of monitoring an aircraft state;
FIG. 8 is a flow diagram of a method of operating an aircraft;
FIG. 9 is a table showing an exemplary data structure illustrating a method of generating machine learning training data; and
FIG. 10 is a table showing an exemplary machine learning training dataset.

### DETAILED DESCRIPTION

This disclosure describes systems and methods for monitoring one or more aircraft states during operation (e.g., flight) of an aircraft, and optionally also for controlling one or more actions (e.g., operating parameters) of the aircraft based on the monitored aircraft state(s). In some embodiments, the methods and systems may improve the operation of one or more monitoring systems of the aircraft and/or may improve the operation of one or more control systems of the aircraft. The use of the methods and systems may potentially alleviate sensing redundancy requirements (and reduce equipment cost) for safety-critical systems of an aircraft by providing a relatively reliable and independent alternate (i.e., backup) source of backup data in the form of synthetic data that is generated analytically. When primary data is determined to be unavailable or unreliable, one or more systems of aircraft may switch to relying on the synthetic data to control one or more actions relating to the aircraft. In some embodiments, switching to using the synthetic data may permit continued operation of aircraft 10 in a non-degraded mode (e.g., prevent aircraft 10 from switching to an alternate degraded mode of operation with reduced safety margins).

In some embodiments, artificial intelligence (AI) augmentation may be used to improve the accuracy of the synthetic data. For example, the methods and systems may use a model trained using machine learning (ML) to apply a correction to the synthetic data generated analytically. Instead of generating the synthetic data itself, the authority of the ML-trained model may be limited to generating a correction within a prescribed range, or at or below a prescribed limit, that is applied to pre-calculated synthetic data. In some embodiments, the use of the ML-trained model as described herein may improve the accuracy of the synthetic data while also facilitating aircraft certification efforts with applicable certification authorities due to the limited authority of the ML-trained model in generating the synthetic data. Even though the following description refers specifically to aircraft, it is understood that the use of Al augmentation for improving synthetic data as described herein may also be used in other applications including other types of mobile platforms (e.g., autonomous vehicle), industrial processes (e.g., nuclear plant), and safety-critical medical apparatus for example.

Aspects of various embodiments are described through reference to the drawings. The term "connected" may include both direct connection (in which two elements contact each other) and indirect connection (in which at least one additional element is located between the two elements). The term "substantially" as used herein may be applied to modify any quantitative representation which could permissibly vary without resulting in a change in the basic function to which it is related. Although terms such as "maximize", "minimize" and "optimize" may be used in the present disclosure, it should be understood that such term may be used to refer to improvements, tuning and refinements which may not be strictly limited to maximal, minimal or optimal.

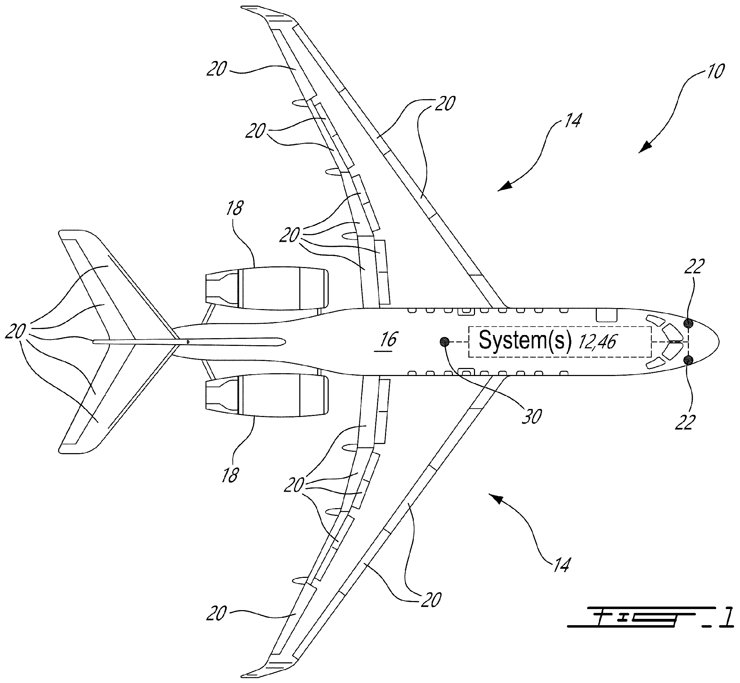

FIG. 1 is a top plan view of an exemplary aircraft 10 including an aircraft state monitoring (and optionally control) system 12 as described herein. In various embodiments, aircraft 10 may be any type of manned or unmanned aircraft (e.g., drones) such as corporate, private, commercial and passenger aircraft. For example, aircraft 10 may be a turboprop aircraft, a business jet, a blended wing body aircraft or a jet airliner. Aircraft 10 may be a fixed-wing aircraft as illustrated herein or a rotorcraft (e.g., helicopter). Aircraft 10 may include wings 14, fuselage 16, one or more engines 18 for propelling aircraft 10, and actuatable flight control surfaces 20. One or more of engines 18 may be mounted to fuselage 16 and/or to wings 14. Flight control surfaces 20 may be actuatable aerodynamic devices allowing the adjustment and control of the aircraft's flight attitude. Flight control surfaces 20 may include one or more primary control surfaces such as elevators, ailerons and rudder for adjusting the pitch, roll and yaw respectively of aircraft 10. Flight control surfaces 20 may include one or more secondary control surfaces such as spoilers, trailing edge flaps, leading edge slats, a horizontal stabilizer and airbrakes for example.

During operation (i.e., flight) of aircraft 10, flight control surfaces 20 may be actuated based on commands that are manually input by the flight crew relying on one or more aircraft states that may be sensed directly and/or that may be calculated (i.e., synthetically generated). In some embodiments of aircraft 10 and in some situations, flight control surfaces 20 may be actuated automatically based on commands generated by a flight control system using control laws that also rely on one or more aircraft states that may be sensed directly and/or that may be calculated.

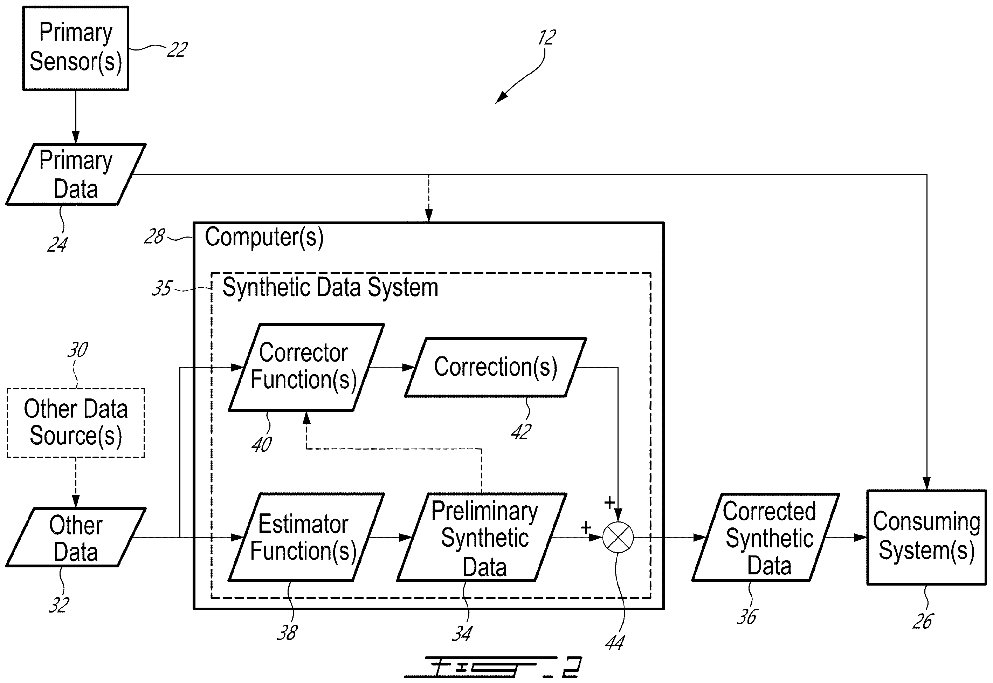

FIG. 2 is a schematic representation of an exemplary aircraft state monitoring system 12 (referred hereinafter as "monitoring system 12") of aircraft 10. Monitoring system 12 may include one or more primary sensors 22 (referred hereinafter in the singular) operable to acquire primary data 24 indicative of an aircraft state. Primary data 24 may be acquired from direct measurements from primary sensor 22. Primary data 24 may be provided to one or more consuming systems 26 (referred hereinafter in the singular) of aircraft 10. Consuming system 26 may include a system that controls one or more devices (e.g., flight control surface(s) 20, engine(s) 18) of aircraft 10 based on primary data 24. Consuming system 26 may include an electronic display or other alerting device located on the flight deck of aircraft 10 so that primary data 24 may be communicated to the flight crew if needed. In some embodiments, consuming system 26 may include a flight management system of aircraft 10, an autopilot system of aircraft 10, an autoland system of aircraft 10, an autothrottle system of aircraft 10 and/or engine 18.

Primary sensor 22 may be operatively connected to consuming system 26 so that primary data 24 may be communicated to consuming system 26 in a manner that bypasses computer 28. Primary sensor 22 may be operatively connected to computer 28 so that primary data 24 may optionally be communicated to computer 28. In some embodiments, primary data 24 may be communicated to consuming system 26 via computer 28.

Monitoring system 12 may include one or more other data sources 30 (referred hereinafter in the singular) (e.g., sensor(s)) operable to acquire other data 32. Other data source 30 may be operatively connected to computer 28 so that other data 32 may be communicated to computer 28. Other data 32 may be used as a basis for generating preliminary synthetic data 34 and corrected synthetic data 36 using synthetic data system 35. Preliminary synthetic data 34 and corrected synthetic data 36 may also be indicative of the same aircraft state(s) represented by primary data 24. Preliminary synthetic data 34 may be computed using one or more estimator functions 38 (referred hereinafter in the singular) of synthetic data system 35, which may be implemented by computer 28. As explained below, one or more corrector functions 40 (referred hereinafter in the singular) of synthetic data system 35 may be operable to generate one or more corrections 42 (referred hereinafter in the singular) to be applied to preliminary synthetic data 34 using a computer-implemented model trained iteratively using (e.g., supervised ML) suitable ML training data associating previous other data with previous corrections. In some embodiments, corrector function 40 may include one or more multi-dimensional look-up tables or a best-fit (e.g., least-square fit) function. In some embodiments, corrector function 40 may be obtained via non-iterative ML.

Corrected synthetic data 36 may provide an alternative (e.g., backup) source of data available to one or more systems of aircraft 10 and that is generated without directly measuring the specific aircraft state in question. Accordingly, preliminary synthetic data 34 may be computed (e.g., derived) from other data 32 stemming from a source independent and different from primary sensor 22. For example, other data source 30 may include a sensor of a different type and having a different operating principle than primary sensor 22. Accordingly, the reliability of corrected synthetic data 36 may not be prone to the same causes of failure or of error as primary sensor 22. In other words, corrected synthetic data 36 may be generated in a manner that is substantially fully independent of primary data 24, and be based on different measurement principles and equipment. Corrected synthetic data 36 may potentially reduce operational risks onboard aircraft 10 by creating an extra layer of (e.g., analytical) redundancy to primary data 24. In some situations, the use of corrected synthetic data 36 may reduce redundancy requirements for the acquisition of primary data 24.

During normal operation of aircraft 10, primary data 24 may be considered higher in rank or importance over corrected synthetic data 36 and may be relied upon by consuming system(s) 26 to control one or more actions relating to aircraft 10. In other words, primary data 24 may be given priority over corrected synthetic data 36 during normal operation. However, when primary data 24 is determined to be unavailable or unreliable, consuming system(s) 26 may switch to relying on corrected synthetic data 36 as an alternate (e.g., backup) source of data instead of primary data 24 to control one or more actions relating to aircraft 10. In other words, corrected synthetic data 36 may serve as alternate data that allows a malfunction that compromises primary data 24 to be mitigated onboard of aircraft 10.

Different estimator functions 38 may be respectively associated with different aircraft states. In some embodiments, estimator function 38 may be model-based. Estimator function 38 may be based on a relatively simple analytic model which captures *a priori* knowledge of the behavior and performance of aircraft 10. The model(s) of estimator function 38 may take different forms including algebraic expressions and integro-differential relationships. The model(s) of estimator function 38 may be linear or nonlinear. Depending on the specific aircraft state that is being monitored, the knowledge embedded in estimator function 38 may include known physics of flight, kinematics and dynamics of aircraft 10, aerodynamic characteristics corresponding to different configurations of aircraft 10 such as different positions of flight control surfaces 20 and different positions of a landing gear of aircraft 10. The knowledge embedded in estimator function 38 may also include computational fluid dynamics data, wind tunnel test data, simulation and flight test data, past experiences, equipment accuracy and performance data, etc. In some embodiments, a simpler estimator function 38 may be based on a balance of forces in straight and levelled flight and steady maneuvering, and according to Newton's second law (i.e., force = mass*acceleration) in non-steady and transient flight. The model(s) of estimator function 38 may be linear or nonlinear, and may or may not include parameter scheduling as a function of the flight condition, operating point and/or configuration of aircraft 10. Estimator function 38 may include dynamic filters such as a complementary filter, a Kalman filter, an extended Kalman filter, an unscented Kalman filter, control loop type of estimators, a state observer, etc.

Simple analytical models and more complicated analytical models capture knowledge of a system but may not fully do so. Analytical models are approximations of reality. Additionally, analytical models may not fully capture an uncertainty associated with the measuring equipment (e.g., accuracy, latency, drift, offset, scale factor errors, etc.), nor all perturbations that may be caused by air turbulence or other factors. For example, analytical models may not capture nonlinearities such as flow separations or disturbances of the air stream due to fuselage 16 or non-steady conditions, boundary layer effects, shock waves, interferences with other equipment and systems such as antennas, the landing gear and doors, a deployed ram air turbine, extended high-lift devices such as slats and flaps, etc. In some situations, it may be impractical or difficult to appropriately model such effects analytically and/or to produce an analytical model that fully captures the knowledge of the system that is modeled.

Preference may be for simpler analytical models that can be more easily implemented. For simple or complex analytical models, the accuracy of preliminary synthetic data 34 may not be adequate for effective fault detection and identification of the critical air data parameters, or to provide backup air data that allows aircraft 10 to maintain its nominal (or alternate) flight control mode of operation in case of unreliable or unavailable primary data 24. Reasons for the inaccuracies may include the analytical model itself being insufficiently accurate, the input measured values themselves may be of a limited accuracy reflecting the imperfect sensors that measure them, or the computations used with such measured values.

Corrector function 40 may provide Al-based augmentation to compensate for inaccuracies that may be present in preliminary synthetic data 34 generated by estimator function 38. In some embodiments, corrector functions 40 may include or be based on a ML-trained model trained using ML and training data associating previous other data with previous corrections. Accordingly, corrector function 40 may compute correction 42 from other data 32. Correction 42 may then be applied to preliminary synthetic data 34 to generate corrected synthetic data 36. In some embodiments, applying correction 42 to preliminary synthetic data 34 may include adding a numerical corrective value to a numerical synthetic value of preliminary synthetic data 34 at summing junction 44. Alternatively or in addition, applying correction 42 to preliminary synthetic data 34 may include multiplying a numerical corrective value with a numerical synthetic value of preliminary synthetic data 34.

Instead of directly computing the synthetic data using the ML-trained model, the ML-trained model of corrector function 40 is used to compute correction 42 that is applied to preliminary synthetic data 34 computed analytically using estimator function 38. In other words, synthetic data system 35 may fuse the benefits of ML with the benefits of the analytical system knowledge that is embedded in estimator function 38. In other words, synthetic data system 35 provides a hybrid solution that integrates an analytical data estimation approach with a ML-based augmentation approach and takes advantages from both and avoids the disadvantages of both. Accordingly, the ML-trained model of monitoring system 12 may have a limited authority by providing augmentation instead of providing synthetic data that is entirely generated by the ML-trained model. As explained further below, ML may be used to learn and compensate for unknown and/or complex analytical knowledge about aircraft 10 and inaccuracies of estimator function 38, and hence to improve the accuracy of preliminary synthetic data 34.

In some situations, the use of corrector function 40 may allow for a simpler (and less accurate) estimator function 38 to be used while still achieving an acceptable level of accuracy for corrected synthetic data 36 by way of correction 42. The simpler estimator function 38 may reduce development time and may also be less computationally intensive in some situations. In some embodiments, the use of corrector function 40 may also compensate for inaccuracies in measurements acquired via sensor(s) of other data source 30 and/or in computation.

In some embodiments, monitoring system 12 may include a validation function that determines whether primary data 24 is reliable or unreliable. In some embodiments, the validation function may implement a voting and arbitration scheme to select the most suitable values for various parameters based on an assessment of their validity and determination of their accuracy. In some embodiments, the validation function may implement random failure monitoring and/or common mode failure monitoring to determine the status of the different sources of data and their parameters.

Aside from providing a backup to primary data 24, preliminary synthetic data 34 and/or corrected synthetic data 36 may also enhance fault detection (e.g., random error and common cause error monitoring) and isolation in the event of a malfunction that compromises primary data 24. In some embodiments, preliminary synthetic data 34 and/or corrected synthetic data 36 may be used as an additional source of redundancy in a voting and arbitration function of divergent sources of primary data 24, and/or for assessing reliability of primary sensors 22 without additional equipment (e.g., redundant sensors). For example, the validation function may include comparing primary data 24 to preliminary synthetic data 34 and/or corrected synthetic data 36 to determine that primary data 24 is reliable or unreliable. In some embodiments, preliminary synthetic data 34 and/or corrected synthetic data 36 may increase the probability of detecting and isolating common mode failures due to their full or partial independence from primary data 24. In the event where primary data 24 would already be provided from two independent sources and different measurement principles, preliminary synthetic data 34 and/or corrected synthetic data 36 could be used to arbitrate and select the correct source by isolating the deficient data and source for example.

In some embodiments, corrector function 40 may take into consideration the operating point of aircraft 10 within the operating (e.g., flight) envelope of aircraft 10. The operating point may include a normal aircraft configuration such as a clean cruise configuration, a descent configuration, an approach or landing configuration in which a landing gear is deployed and/or high-lift devices are extended for example. The operating point may include an abnormal aircraft configuration resulting from one or more malfunctions such as loss of an engine (e.g., one engine inoperative) for example. Corrector function 40 may be configured (e.g., ML-trained) to perform correction scheduling as a function of the operating point. For example, corrector function 40 may make use of different ML-trained models and/or correction schedules depending on the operating point (e.g., based on speed or altitude) and/or depending on the current phase of flight of aircraft 10. Other data 32 and/or preliminary synthetic data 34 may be indicative of the operating point and may be used by corrector function 40 to compute the correction 42 that is applicable for the vicinity of this specific operating point. The operating envelope may define operational limits for aircraft 10 with respect to a maximum speed and load factor given a particular atmospheric density. The operating envelope may define one or more ranges of operating conditions within which aircraft 10 can operate safely. The operating point may be determined based on other data 32 or based on preliminary synthetic data 34. In some embodiments, correction function 40 may identify an operating point of aircraft 10 within an operating envelope of aircraft 10, and generate correction 42 based on the operating point. In some embodiments, other data 32 and/or some of preliminary synthetic data 34 may be preprocessed such as being limited and filtered prior to being used as input(s) for corrector function 40. The use preliminary synthetic data 34 by correction function 40 may help capture behavior and performance characteristics of aircraft 10 in different flight regimes.

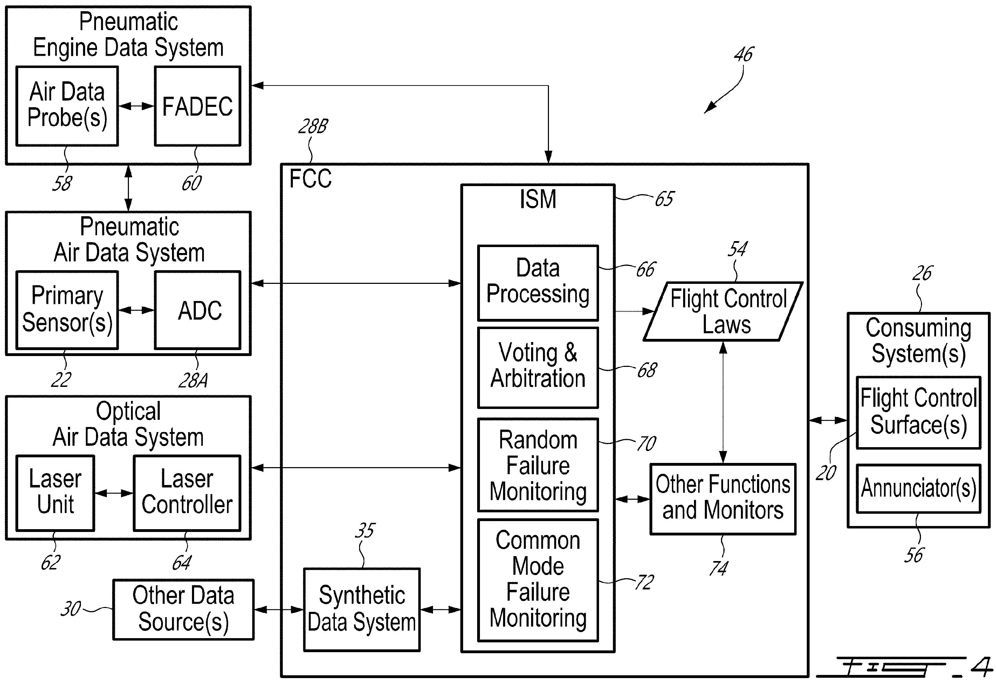

As explained further below, monitoring system 12 may be used to monitor air (i.e., pneumatic) data and may be incorporated into a flight control system 46 (shown in FIG. 4) of aircraft 10. However, monitoring system 12 may also be incorporated into other systems (e.g., propulsion system such as engine 18) of aircraft 10 where synthetic data may be of benefit. For example, monitoring system 12 may be useful for systems having relatively stringent availability requirements for data indicative of an aircraft state. Monitoring system 12 may useful for safety-critical systems where there are sufficient primary data 24 and other data 32 to permit the generation of corrected synthetic data 36.

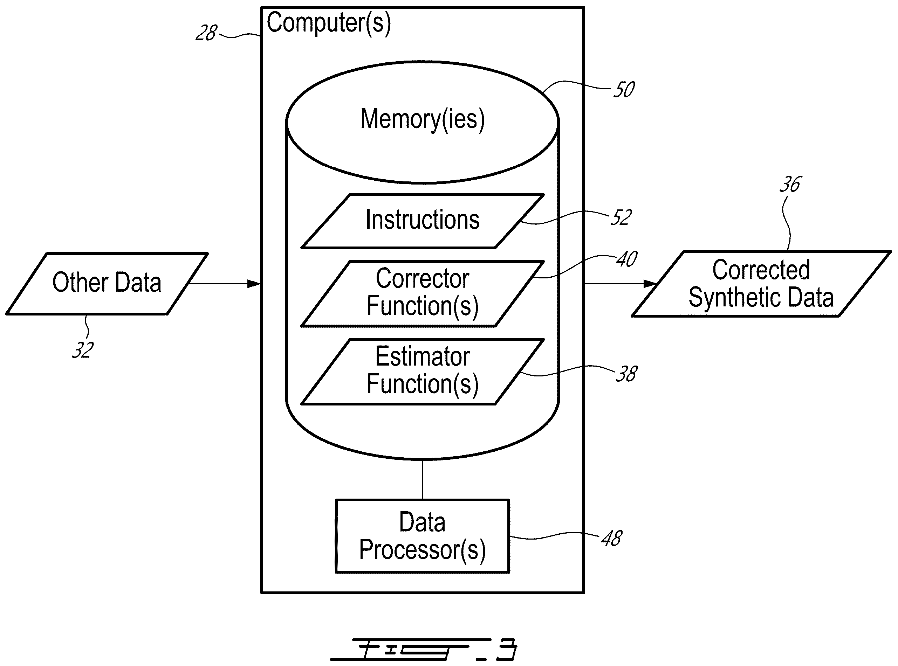

FIG. 3 is a schematic representation of an exemplary computer 28 of monitoring system 12. In some embodiments, computer 28 may be implemented as one or more air data computers 28A (shown in FIG. 4 and referred hereinafter in the singular as "ADC 28") and/or one or more (e.g., primary) flight control computers 28B (shown in FIG. 4 and referred hereinafter in the singular as "FCC 28"). Computer(s) 28 (referred hereinafter in the singular) may include one or more data processors 48 (referred hereinafter in the singular as "processor 48") and non-transitory machine-readable memory(ies) 50 (referred hereinafter in the singular). Computer 28 may be configured to generate one or more outputs such as corrected synthetic data 36 based on one or more inputs such as other data 32 for example. In some embodiments, computer 28 may optionally perform tasks other than those disclosed herein. Computer 28 may perform one or more procedures or steps defined by instructions 52 (e.g., software, program code) stored in memory 50 and executable by processor(s) 48 to generate corrected synthetic data 36.

Processor(s) 48 may include any suitable device(s) configured to cause a series of steps to be performed by computer 28 so as to implement a computer-implemented process such that instructions 52, when executed by computer 28 or other programmable apparatus, may cause the functions/acts specified in the methods described herein to be executed. Processor(s) 48 may include, for example, any type of general-purpose microprocessor or microcontroller, a digital signal processing (DSP) processor, an integrated circuit, a field programmable gate array (FPGA), a reconfigurable processor, a graphics processing unit (GPU), a specialized neural engine processing unit (NPU), other suitably programmed or programmable logic circuits, or any combination thereof.

Memory 50 may include any suitable machine-readable storage medium. Memory 50 may include non-transitory controller readable storage medium such as, for example, but not limited to, an electronic, magnetic, optical, electromagnetic, infrared, or semiconductor system, apparatus, or device, or any suitable combination of the foregoing. Memory 50 may include any storage means (e.g., devices) suitable for retrievably storing machine-readable instructions 52 executable by processor(s) 48. In some embodiments, estimator function 38 and corrector function 40 may also be stored in memory 50.

FIG. 4 is a schematic representation of an exemplary flight control system 46 (referred hereinafter as "FCS 46") of aircraft 10 incorporating monitoring system 12 of FIG. 2. FCS 46 may use (e.g., safety-critical) air data to control one or more actions relating to aircraft 10. Air data may be representative of the air mass state around aircraft 10 during flight. This air data may be used by the flight crew and on-board systems to make operational decisions and control actions regarding aircraft 10.

FCS 46 may include additional components than those illustrated herein. The physical signals carried by the indicated signal lines could be analog or digital. The signal lines may be multidimensional and may carry a plurality of physical signals, parameters or data elements. FCS 46 may include digital signal transmitter and receiver hardware components to implement processing functions, such as buffering, encoding, encryption, checks, etc. FCS 46 may include one or more analog-to-digital converters.

FCS 46 may, via one or more flight control laws 54, use the air data as a basis to actuate one or more flight control surfaces 20 to adjust and control the flight attitude of aircraft 10. For example, FCC 28B and flight control surfaces 20 may be operatively connected together in a fly-by-wire configuration via one or more actuators and controllers so that FCC 28B may use the air data to generate commands for actuating flight control surface(s) 20. In some embodiments, FCC 28B may cause some of the air data to be communicated to the flight crew of aircraft 10 via one or more annunciators 56 (e.g., displays). Alternatively or in addition, some of the air data may be communicated to consuming system 26 directly instead of through FCC 28B. For example, some of the air data may be communicated to consuming system 26 via a communication path that excludes FCC 28B. Examples of measured or computed air data may include airspeed (e.g., calibrated, true), Mach number, angle of attack, sideslip angle, dynamic pressure, (e.g., static and total) outside air temperatures, pressure altitude, vertical speed (i.e., rate of climb or descent), an air density outside of aircraft 10.

FCC 28B may be in data communication with a pneumatic air data system that includes primary sensor(s) 22 and ADC 28A. In this implementation, primary sensor(s) 22 may be pneumatic sensors configured to be exposed to a stream of air outside of aircraft 10 during operation of primary sensor(s) 22. The basic air data may be measured with static ports and total pressure probes, which may be combined in multifunction probes, angular (i.e., pivotable) vanes, and temperature sensors. In various embodiments, primary sensor(s) 22 may include one or more of the following: an air data SmartProbe^{®}, a multifunction probe, a Pitot-static probe, a static port, an angle-of-attack vane, an angle-of-sideslip vane, and a total air temperature probe. In some embodiments, primary sensor(s) 22 may include a plurality of redundant and optionally dissimilar sensors.

In various embodiments, some or all of the functionality of ADC 28A may be hosted in FCC 28B or may be implemented in hardware that is separate from and in communication with FCC 28B. For example, ADC 28A may include one or more (e.g., redundant) line replaceable units, and/or one or more integrated modular avionics modules.

Primary sensor(s) 22 may be located in the air stream outside of a forward section of fuselage 16 and may require detailed calibration and compensation to reflect values at a reference point such as the aircraft's center of mass or center of gravity. Primary sensor(s) 22 used to measure air data may be adversely affected by environmental conditions, other conditions or events. For example, each individual primary sensor 22 (e.g., probe) and its associated electronics could potentially be susceptible to suffer a random failure independently of the other primary sensor 22. Additionally, a plurality of identical primary sensors 22 could potentially be impacted by a design, manufacturing, or installation flaw (i.e., hardware and software) at once. Also, having primary sensors 22 exposed to the air stream could potentially result in a plurality of primary sensors 22 simultaneously becoming victims of a similar failure such as blocking or contamination of pressure ports by volcanic ashes or due to an unexpectedly severe icing condition. Such simultaneous failures resulting from a common cause are referred herein as a common mode failures.

Air data probes and measurements acquired with the pneumatic air data system are referred to as "pneumatic" because they involve the measurement of the local air flow characteristics such as pressure (total and static), temperature (total and/or static), or direction (angle of attack, sideslip angle). Other air data parameters that may be computed by ADC 28A from these measurements include airspeed (calibrated, true) and Mach number for example.

In some embodiments, the pneumatic air data system may optionally be supplemented by additional air data signal(s) originating from engine 18. For example, FCC 28B may optionally be in data communication with a pneumatic engine data system associated with engine(s) 18 of aircraft 10, and that may include one or more air data probes 58. FCS 46 may include direct connections to air data probes 58 or other engine sensors. FCS 46 may include indirect digital connections to air data probes 58 via full authority digital engine control (FADEC) 60 of engine 18. Such additional air data signals may include total air temperature as well as measured pressure(s), or computed or estimated air data parameters. These additional signals could be used for monitoring or as secondary (backup) data for FCS 46. These additional signals could be used as part of an input signal management function described further below.

In some embodiments, the pneumatic air data system may optionally be supplemented by additional air data signals originating from an optical air data system including laser unit 62 and laser controller 64 for increased robustness in FCS 46. For example, FCC 28B may optionally be in data communication with the optical air data system. The optical air data system may provide a full or partial set of air data parameters and may require some parameters originating from other systems. For example, an estimate of the altitude or air density may be required to extend the envelope of operation of the optical air data system beyond a certain altitude. In some embodiments, an advantage of adding an optical air data system to a pneumatic air data system is that the optical air data system may not rely on pneumatic measurements and hence would not be subject to performance degradation occurring simultaneously with that of a pneumatic air data system. Common mode failures impacting both the pneumatic air data system and the optical air data system simultaneously could also be avoided. For example, nonstandard icing conditions or other probe blocking phenomenon(s) would not necessarily impact both systems at the same time. In case of a performance degradation of one system, a third arbitrating system may be used to identify the reliable system and hence isolate the failed (e.g., unreliable) system.

When incorporated into FCS 46, synthetic data system 35 may serve as an alternative air data system that can produce synthetic air data quantities without directly measuring the air data. In some embodiments, synthetic data system 35 may potentially further reduce risk by creating an extra layer of (e.g., analytical) redundancy to the pneumatic air data system such as the Pitot-static probe(s) and pivotable vanes. The addition of synthetic data system 35 may provide an additional level of dissimilar redundancy that can enhance safety without the addition of equipment that is penalizing in terms of weight, cost and complexity. In some embodiments, synthetic data system 35 may provide a means of reducing equipment over a conventional system for a similar level of safety. Synthetic data system 35 may also be used to detect failures of other subsystems through data compatibility checks. In some situations, synthetic data system 35 may alleviate the requirements for redundant parallel measurement chains of the pneumatic air data system for a given availability requirement, or to avoid having to add redundant parallel measurement chains to satisfy a more stringent availability requirement, by synthesizing redundant data from readily available data from other (e.g., non-pneumatic) data source(s) 30.

In contrast with pneumatic data described above, non-pneumatic data are any other data that may be available from other aircraft systems, and any other design or performance knowledge, that can be used to synthesize air data parameters. Generating air data parameters from pneumatic data on one side, and from non-pneumatic data on the other, may make the two sets of air data parameters independent and dissimilar. This is possible because of coherence (e.g., analytic redundancy) between the different sources of data based on other knowledge such as the physics-based flight mechanics/dynamics, aerodynamics and design of aircraft 10. In case of a failure of one or more sensors of a given type due to a common cause such as blocking caused by an unmanageable icing condition or volcanic ashes, the coherence would be lost, and the failure could be detected. With independent and dissimilar equipment, the failed (e.g., unreliable) equipment could then be identified and isolated.

In some embodiments, other data 32 acquired via other (e.g., non-pneumatic) data source(s) 30 may be acquired independently of and in a dissimilar manner as air data acquired via primary sensor 22 and as air data acquired via laser unit 62 of the optical air data system. Other data 32 acquired from other data source(s) 30 may include inertial reference data such as vehicle attitude and heading, body rates and accelerations, ground speed and vertical speed, horizontal position and altitude. Such other data source(s) may include an inertial reference system of aircraft 10, an attitude and heading reference system of aircraft 10, an inertial measurement unit of aircraft 10, a global navigation satellite system (GNSS) receiver of aircraft 10, such as a global positioning system (GPS) receiver of aircraft 10, a Galileo receiver of aircraft 10, a Globalnaya Navigatsionnaya Sputnikovaya Sistema (GLONASS) receiver of aircraft 10, a BeiDou receiver of aircraft 10, and/or other aircraft navigation equipment and systems for example. Other data 32 may also include aircraft mass or weight, center-of-mass or center-of-gravity location(s), moments of inertia estimated by a flight management system of aircraft 10, various engine data such as thrust and fuel burn rate provided by an engine power system, flight control surface deflections and rates, flight control surface actuator loads measured by FCS 46, and aircraft configuration and status information for various systems such as the landing gear position (e.g., retracted/deployed) and the position(s) of high-lift surfaces such as trailing edge flaps and leading edge slats. Other data source(s) 30 may include one or more sensor(s) that have different operating principles as primary sensor(s) 22 and that measure different parameters as primary sensor(s) 22. For example, sensor(s) of other data source 30 may be non-pneumatic and hence may not be directly exposed to the stream of air outside of aircraft 10.

Other data 32 may serve as input signals to (e.g., analytic) estimator function 38 shown in FIG. 2. Estimator function(s) 38 may generate (i.e., synthesize) one or more estimates of the air data parameters without relying on their direct measurements. The output parameters of estimator function(s) 38 are referred to preliminary synthetic data 34 because they are generated analytically by computations using data other than primary data 24 acquired by primary sensor(s) 22 of the pneumatic air data system. Estimator function(s) 38 may use other data 32 together with some estimation algorithm(s) and other system knowledge such as an aircraft kinematic/dynamic and/or aerodynamic model to generate preliminary synthetic data 34 of interest. In some embodiments, synthetic data system 35 may be implemented as a software function executed by FCC 28B or by ADC 28A. In some embodiments, the functionality synthetic data system 35 may be implemented in hardware that is separate from and in communication with FCC 28B. For example, synthetic data system 35 may be integrated as part of an integrated modular avionics system, or within a hosting line replaceable unit in data communication with FCC 28B.

The air data from the different systems such as the pneumatic engine data system, the pneumatic air data system, the optical air data system and/or of synthetic data system 35 may be provided to input signal manager 65 (referenced hereinafter as "ISM 65") which may perform functions that are periodically executed in FCC 28B substantially in real-time (e.g., a rate of 100 Hz). ISM 65 may include one or more several subfunctions, each periodically executed at a rate equal to or lower than that of ISM 65. For example, ISM 65 may include data processing function 66 operable to receive the data, decode and scale the data, validate the data, filter the data to reduce noise and/or remove structural vibrations at specific frequencies, and/or to change the coordinate system including conversion of the data to a predefined reference point for example. In some embodiments, ISM 65 may perform voting and arbitration function 68 operable to select the most suitable values for the various parameters received based on an assessment of their validity and determination of their accuracy. In some embodiments, ISM 65 may perform random failure monitoring function 70 and common mode failure monitoring functions 72 operable to determine the status of the different sources of data and their parameters.

Following ISM 65 and optionally one or more other functions and monitors 74, a best set of data may be selected and provided to flight control laws 54 and to the associated flight mode logic. Some or all of the best set of data may also be provided to other consuming systems 26 such as a flight management system, an autopilot, autoland and/or autothrottle system, and/or a system of engine 18 via a data communication network onboard of aircraft 10.

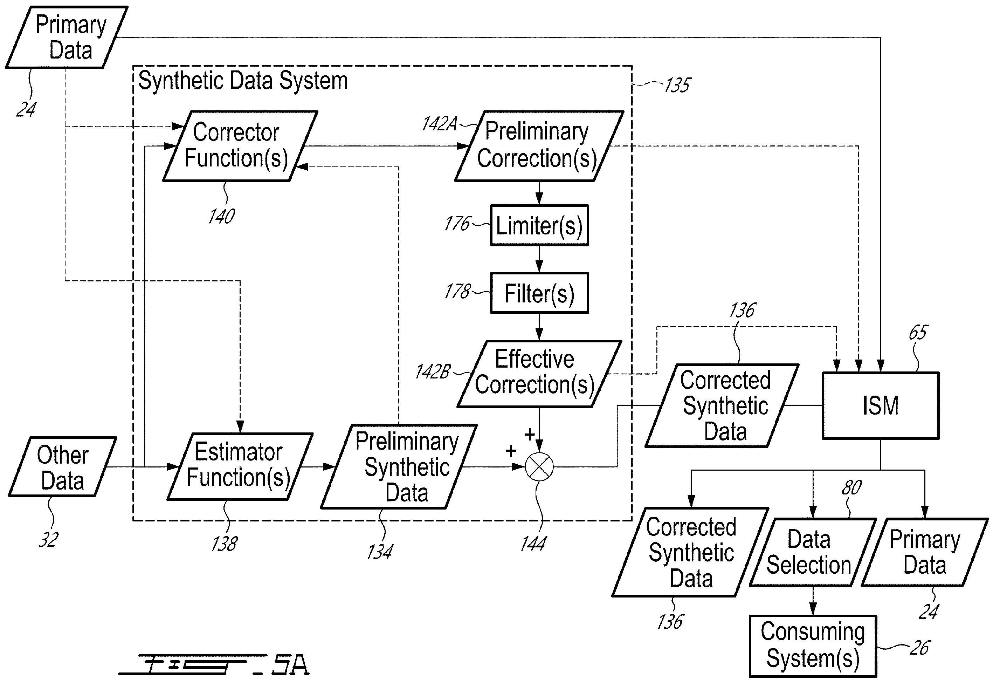

FIG. 5A is a schematic representation of another exemplary synthetic data system 135 in an operating (e.g., non-training) configuration. Synthetic data system 135 may be incorporated into monitoring system 12 of FIG. 2, into FCS 46 of FIG. 4 and/or into another system of aircraft 10. Synthetic data system 135 is illustrated together with ISM 65 of FCS 46. Synthetic data system 135 may include elements of synthetic data system 35 described above. Like elements are identified using reference numerals that have been incremented by 100. Synthetic data system 135 may be implemented by computer 28 shown in FIG. 2. Other data 32 may be used as a basis for generating preliminary synthetic data 134 and corrected synthetic data 136 using synthetic data system 135. Preliminary synthetic data 134 and corrected synthetic data 136 may also be indicative of the same aircraft state(s) represented by primary data 24. Preliminary synthetic data 134 may be computed using one or more estimator functions 138 (referred hereinafter in the singular) of synthetic data system 135. One or more corrector functions 140 (referred hereinafter in the singular) of synthetic data system 135 may be operable to generate one or more preliminary corrections 142A (referred hereinafter in the singular) to be applied to preliminary synthetic data 134. Corrector function 140 may include a computer-implemented model iteratively trained using (e.g., supervised ML) suitable ML training data associating previous other data with previous corrections.

Limiting or bounding the correction within a prescribed range may restrict the authority of corrector function 140 in modifying preliminary synthetic data 134 obtained analytically from estimator function 138. During normal operation of synthetic data system 135, the magnitude of the correction may be relatively small relative to the applicable value of preliminary synthetic data 134. For example, in some situations, the magnitude of the correction to be added to or subtracted from preliminary synthetic data 134 may be less than 10% (e.g., between 0% and 10%) or less than 5% (e.g., between 0 and 5 percent) of the applicable value of preliminary synthetic data 134. An excessively large preliminary correction 142A may indicate a problem with the performance of corrector function 140. Limiting effective correction 142B that gets applied to preliminary synthetic data 134 could be used to limit the corruption of corrected synthetic data 136 to a safe value.

Restricting the authority of corrector function 140 may facilitate certification of aircraft 10 since deficiencies in deriving the correction would limit their impact and criticality to the operation of aircraft 10. Accordingly, preliminary correction 142A may be limited (e.g., bounded) by way of limiter(s) 176 and/or filtered by way of filter(s) 178 to generate effective correction 142B that is then applied to preliminary synthetic data 134 by way of addition at summing junction 144. Applying a limit to preliminary correction 142A may include determining that a magnitude of preliminary correction 142A exceeds a threshold, and reducing the magnitude of preliminary correction 142A. Applying a limit to preliminary correction 142A may include determining that a numerical value of preliminary correction 142A exceeds a prescribed value, and adjusting the numerical value of preliminary correction 142A to the prescribed value. In other words, limiter(s) 176 may cause a magnitude of effective correction 142B to be lower than preliminary correction 142A in some situations. Alternatively or in addition, filter 178 may be used to evaluate preliminary correction 142A against one or more criterion and prevent an erroneous correction to be applied to preliminary synthetic data 134. Filter 178 may be configured to reduce and/or smoothen noise (e.g., rapid and relatively large variations) in numerical value of preliminary correction 142A by using a low-pass filter. Filter 178 may be configured to apply a large correction more progressively and line with expected or known aircraft dynamics and associated perturbations due to turbulence and gusts. Other processing may be applied to preliminary correction 142A prior to being applied to preliminary synthetic data 134. Filtering and/or other processing applied to preliminary correction 142A may be beneficial for performance reasons. In some embodiments, synthetic data system 135 may include an enable/disable function having an ability to deactivate corrector function 140 based on logic checking the availability and/or integrity of other data 32, the magnitude of preliminary correction 142A or of effective correction 142B, and/or the accuracy of various data used within synthetic data system 135.

Corrected synthetic data 136 may be provided to ISM 65 and processed as explained above. Other values from primary data 24, preliminary correction 142A and effective correction 142B may optionally be provided to ISM 65 and used to determine a validity status of corrected synthetic data 136 in voting and arbitration function 68. If judged invalid, then corrected synthetic data 136 would not be used, and a corresponding notification could be provided to other aircraft system(s) and/or to the flight crew. In some situations, (not corrected) preliminary synthetic data 134 may be used to support a degraded mode of operation of aircraft 10. If judged valid, then corrected synthetic data 136 may possibly be used as a replacement for primary data 24 and optionally also as a replacement for secondary/backup) data acquired via the optical air data system for example.

After processing by ISM 65, the appropriate data may be provided to consuming system(s) 26. In some embodiments, ISM 65 may output corrected synthetic data 136, primary data 24 together with data selection 80. Data selection 80 may be the result of voting and arbitration function 68 and/or other processing performed by ISM 65 to indicate which source of air data should be used by consuming system 26 to control one or more components of aircraft 10. With data selection 80, consuming system(s) 26 may then select the appropriate source of data.

Corrector function 140 may be driven by the same other data 32 as estimator function 138. Alternatively, a portion of other data 32 used to drive corrector function 140 may be different from another portion of other data 32 used to drive estimator function 138. Other data 32 may be independent from preliminary synthetic data 34. In some embodiments, other data 32 that is used by estimator function 138 and by corrector function 140 to synthesize a parameter may be independent of the equivalent sensed parameter from primary data 24. In some embodiments, some primary data 24 may optionally be used by corrector function 140 and/or by estimator function 138. Alternatively or in addition, some preliminary synthetic data 134 produced by estimator function 138 may be used as input to correction function 140 help identify a current operating point in the operating envelope of aircraft 10 and compute preliminary correction 142A accordingly. However, the output (e.g., preliminary correction 142A) from corrector function 140 may remain independent of primary data 24 that may be used in computing corresponding preliminary synthetic data 134.

In some embodiments, some (e.g., a subset of) air data parameters from primary data 24 may be used as input to estimator function 138 when these air data parameters are independent from and not directly related to the parameter(s) to be estimated by estimator function 138. In this manner, dissimilar estimates may be generated for monitoring and assessing the validity of the air data. For example, an impact pressure from the pneumatic air data system may be used to compute a synthetic angle of attack from a set of other data 32 which are not related to primary data 24. In so doing, one may compare the synthetic angle of attack with the angle of attack obtained through direct measurement with angle of attack vanes for example. In another example, the angle of sideslip (AOS) can be estimated from a differential static pressure measured on opposing sides of fuselage 16 of aircraft 10. The AOS could also be measured directly with a vertical vane similar to an angle-of-attack vane. A synthetic value for the AOS may also be estimated from the lateral load factor measured by the inertial reference unit, rudder position, known aircraft aerodynamics and aircraft weight. Accordingly, estimating a synthetic value for the AOS may also require the dynamic pressure, which is an air data parameter that can be measured using the pneumatic air data system or else synthesized. Validation may be performed based on the consistency of all these data even though there could be some links between these parameters.

In some situations, there may be a plurality of ways of estimating a given parameter. Estimator function 138 may incorporate various estimators for any single air data parameter where each estimator is based on a different model/algorithm and set of input parameters. In some embodiments, different types of estimators and/or set of input signals may be used to synthesize any desired air data parameter and hence generate a plurality of instances of a parameter value. In some embodiments, each instance of the parameter value may include an evaluation of its accuracy based on the known respective accuracy(ies) of the one or more parameters that are used for the computation of that instance. Similarly, a value of preliminary synthetic data 134 generated by estimator function 138 may include an evaluation of its accuracy based on the known respective accuracy(ies) of the one or more parameters that are used for the computation of that value of preliminary synthetic data 134.

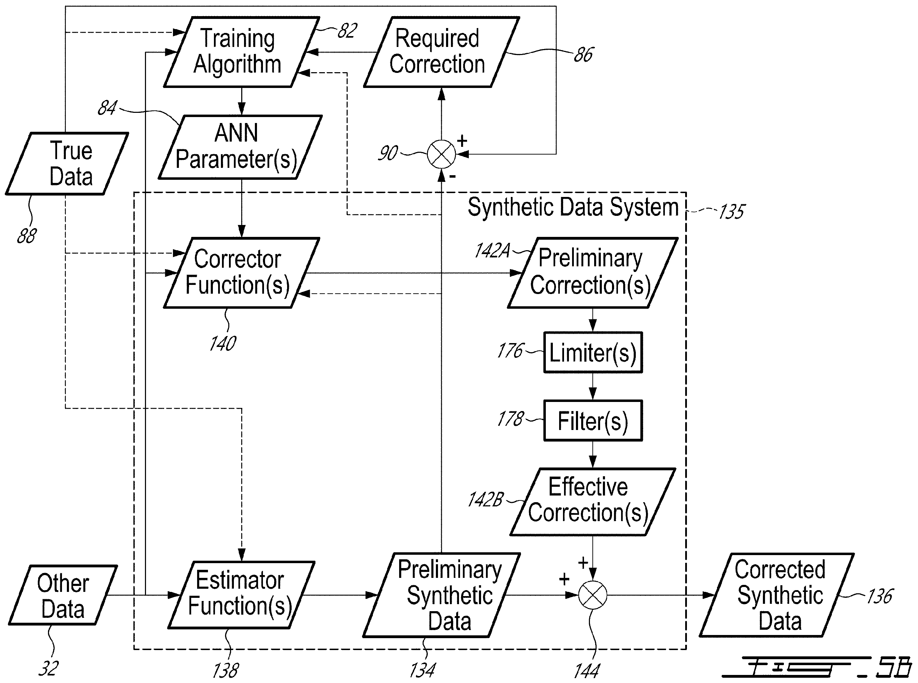

FIG. 5B is a schematic representation of synthetic data system 135 of FIG. 5A in a training configuration where corrector function 140 is being trained using ML. Corrector function 140 may not be based on a (e.g., physics) model relying on *a priori* knowledge of aircraft 10 but may instead be based on ML from a significant set of training data. Corrector function 140 may include a computer-implemented model that has been trained using (e.g., supervised ML) suitable ML training data associating previous (e.g., non-pneumatic) other data 32 with previous effective corrections 142B to be applied (e.g., at summing junction 144) to preliminary synthetic data 134 that has been generated by estimator function 138. In some embodiments, corrector function 140 may be implemented as one or more artificial neural networks (ANNs) of suitable type(s) and architecture(s), and/or other computer-implemented model(s) trained using ML. In various embodiments, corrector function 140 may be implemented as a feedforward neural network, recurrent neural network, and/or radial basis function. An ANN in the form of a recurrent neural network may be suitable for estimating parameters that include a history dependence such as parameters that depend on an air flow that requires some time to adjust to changes. An ANN used for corrector function 140 may have a single-layer or multilayer topology.

In some embodiments, a separate individual corrector function 140 may be associated with each parameter that is being synthesized. Alternatively, a multidimensional corrector function 140 may generate a plurality of synthesized parameters. In some embodiments, synthetic data system 135 may include a combination of one or more individual corrector functions 140 and one or more multidimensional corrector functions 140 with identical, similar or dissimilar inputs.

Corrector function 140 may include: a single (i.e., sole) ANN to compute preliminary corrections 142A for a plurality of operating parameters of aircraft 10; one ANN to compute preliminary correction 142A for respective ones of the plurality of operating parameters of aircraft 10; and/or a combination of ANNs that each compute preliminary correction 142A for one or more operating parameters of aircraft 10. Moreover, there could be a plurality of ANNs driven by different sets of input signals to generate preliminary correction(s) 142A to be applied to any given set of values of preliminary synthetic data 134 respectively associated with different operating parameters of aircraft 10. In embodiments where corrector function(s) 140 includes a plurality of independent and possibly architecturally different ML-trained models, then training could be performed using different training processes as applicable for each ML-trained model. The training does not need to be performed simultaneously for all ML-trained models.

The ANN of corrector function 140 may be trained using training algorithm 82 implementing loss function minimization by optimizing one or more ANN parameters 84 to minimize the difference between the predicted output and the actual target values in a given dataset. Gradient-based methods such as backpropagation may be implemented by training algorithm 82 to estimate ANN parameter(s) 84. During the training phase, the ANN may learn from suitable training data by iteratively updating ANN parameter(s) 84 to minimize a defined loss function. This method may allow the ANN to generalize to unseen data. ANN parameter(s) 84 may represent connection weights and neuron (i.e. node) biases or thresholds. The ANN architecture (e.g., number of layers, number or neurons per layers, topology of connections including feedforward and recurrent types) may be selected to provide accurate corrections over the whole domain of operation while minimizing the required computations.

Training of corrector function 140 may be conducted with training algorithm running on computer 28, FCC 28B or on another computer. For example, training of corrector function 140 may be conducted on a general-purpose central processor unit, a GPU, a NPU, or specialized ANN software and/or hardware such as a neural processing unit of the trade name Apple Neural Engine (ANE).

In some embodiments, corrections that have been learned and generalized by the ANN may be transformed and implemented as one or more (e.g., multidimensional) look-up tables (LUTs). One or more LUTs may be extracted from the trained ANN by driving the ANN with combinations of input parameter values covering the full range of values with a resolution (i.e. discretization) compatible with the resulting and desired accuracy of the corrections. The resulting LUT(s) may be validated to ensure that any step discontinuities in the correction data are properly captured. For example, this may be done by extracting one or more LUTs at various levels of discretization and comparing the computed corrections between them.

The training data provided to training algorithm 82 and used to determine ANN parameters 84 may include other data 32 and corresponding required correction(s) 86. Preliminary synthetic data 134 may be determined with estimator function 138 based on other data 32. Required correction 86 may be determined by comparing preliminary synthetic data 134 with true data 88 at summing junction 90. Required correction 86 may include a difference in magnitude between a numerical value of preliminary synthetic data 134 and a numerical value of true data 88. In other words, required correction 86 may be determined by subtracting preliminary synthetic data 134 from true data 88 at summing junction 90. To preserve independence, the inputs to correction function 140 may not include data against which preliminary synthetic data 134 is subsequently compared.

True data 88 may be representative of valid primary data 24. However, true data 88 may be determined empirically or by simulation/modeling. For example, true data 88 may be generated from computational fluid dynamics, from a flight dynamic simulator (steady and unsteady flight and maneuvering), from wind tunnel testing, from recorded flight test data, or from any combination thereof to promote accuracy and robustness (i.e. generalization) of true data 88. The training data may include steady-state conditions and/or trimmed conditions. For example, the training data may cover one or more of the following conditions: straight and level flight; dynamic maneuvers such as turns and transitions; extreme conditions (e.g., near stall, high-speed dive); various airspeeds or Mach numbers; different levels of turbulence; different atmospheric conditions and altitudes; a range of aircraft weights and center of gravity locations, different normal and abnormal (e.g., failure) aircraft configurations (e.g., high-lift surfaces retracted or deployed, landing gear retracted or extended, or in transition, one engine inoperative (OEI), etc.). The training data may cover conditions within the operational envelope of aircraft 10 and also cover some abnormal conditions that are slightly outside of the operational envelope to promote accuracy and desirable behaviour at the boundary of the operational envelope and slightly beyond the operational envelope.

In some embodiments, an objective of the training may be to have corrector function 140 determine corrections that when applied to preliminary synthetic data 134, minimize an estimation error between the corrected synthetic data 136 and the corresponding true data 88. In other words, ANN parameters 84 of corrector function 140 may be adjusted by training to make preliminary correction 142A correspond as closely as possible to the difference between preliminary synthetic data 134 and true data 88. For example, the training may be intended to be either for predicting errors between preliminary synthetic data 134 and true data 88, or for generating corrections such that corrected synthetic data 136 and corresponding true data 88 have a minimal error between them.

The training of corrector function 140 may be conducted offline, that is not during flight of aircraft 10. Accordingly, ANN parameter(s) 84 may be predetermined and corrector function 140 may be pre-trained prior to being used as part of a real (e.g., aircraft) application.

Some embodiments of synthetic data system 135 may permit the training of corrector function 140 to be conducted online while aircraft 10 (or a flight test aircraft) is in operation and in flight. During online training, primary data 24 that is positively assessed as being valid, correct, and accurate may be used as true data 88 to determine ANN parameter(s) 84. The online training could be used to improve (fine tune) the quality of preliminary correction 142A using additional real-time data to modify the pretrained correction function 140. During online training of corrector function 140, the use of corrected synthetic data 136 by ISM 65 and/or by consuming system(s) 26 may be (e.g., temporarily) disabled. In some embodiments, synthetic data system 135 may include an offline trained corrector function and an additional on-line training corrector function that is added over the offline trained corrector. In such embodiments, corrections determined by the on-line training corrector function may be limited. Offline training of the corrector function may be preferred for certification purposes. Some online training could be performed during flight of a flight test vehicle for example.

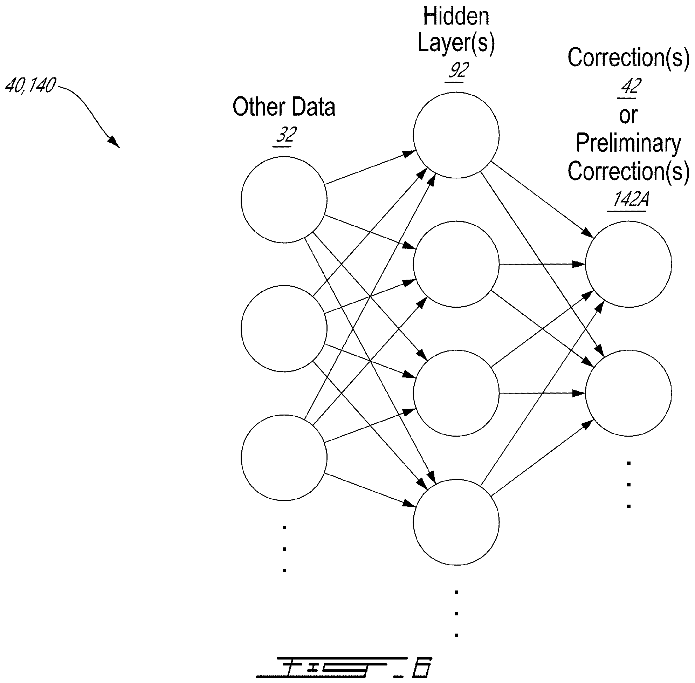

FIG. 6 is a schematic representation of an exemplary architecture of an ANN of corrector function(s) 40, 140 of synthetic data system(s) 35, 135. The ANN may include interconnected units or nodes called artificial neurons. The illustrated circular nodes represent artificial neurons and the arrows each represent a connection from the output of one artificial neuron to the input of another. Each artificial neuron receives signals from connected neurons, then processes them and sends a signal to other connected neurons. The signal may be a real number, and the output of each neuron may be computed by a function of the sum of its inputs, called an activation function. The strength of the signal at each connection is determined by a weight (e.g., ANN parameter 84), which is adjusted iteratively during the learning process (i.e., training). The ANN may learn from experience and be trained using training data to derive a suitable correction 42 or preliminary correction 142A from other data 32.

The artificial neurons of the ANN may be aggregated into layers. Different layers may perform different transformations on their inputs. Signals may travel from the input layer (e.g., values of other data 32) to the output layer (e.g., corresponding values of correction 42 or preliminary correction 142A) by passing through one or more intermediate hidden layers 92. In some embodiments, the ANN may be a deep neural network having two or more hidden layers 92. In other words, the ANN may be used to correlate one or more values of other data 32 to a corresponding value of correction 42 or preliminary correction 142A during operation of corrector function 40, 140. In a recurrent ANN, some signals may travel from the output layer to the input layer in addition to signals going from the input layer to the output layer through intermediate hidden layers, if any. In a recurrent ANN, some signals may also connect downstream layers to upstream layers, whether the layers are hidden or not. For example, some signals may connect neurons of any intermediate layers toward the direction of the input layer (i.e., backward direction). In a recurrent ANN, an output signal from a specific neuron on a layer may be fed back to itself as an input signal with a delay.

A recurrent ANN topology may be appropriate for learning the dynamics (i.e., time-dependence) of correction 42 or preliminary correction 142A. For example, current corrections may be dependent on past aircraft states, not only the instantaneous state of aircraft 10. For example, during significant maneuvering, the airflow may not instantaneously adjust to the new state and hence the correction may be slightly delayed. Another way of achieving the time-dependence aspect of correction 42 or preliminary correction 142A in some situations may be to drive corrector function 40, 140 at any execution period with a sequence of other data 32 rather than only the current other data 32. For example, corrector function 40, 140 may be driven using a plurality of (e.g., sequential) preceding values (i.e., the last N instances) of other data 32 instead of only the current (latest) value(s) of other data 32. Training of corrector function 40, 140 may be aligned with such sequential input of other data 32.

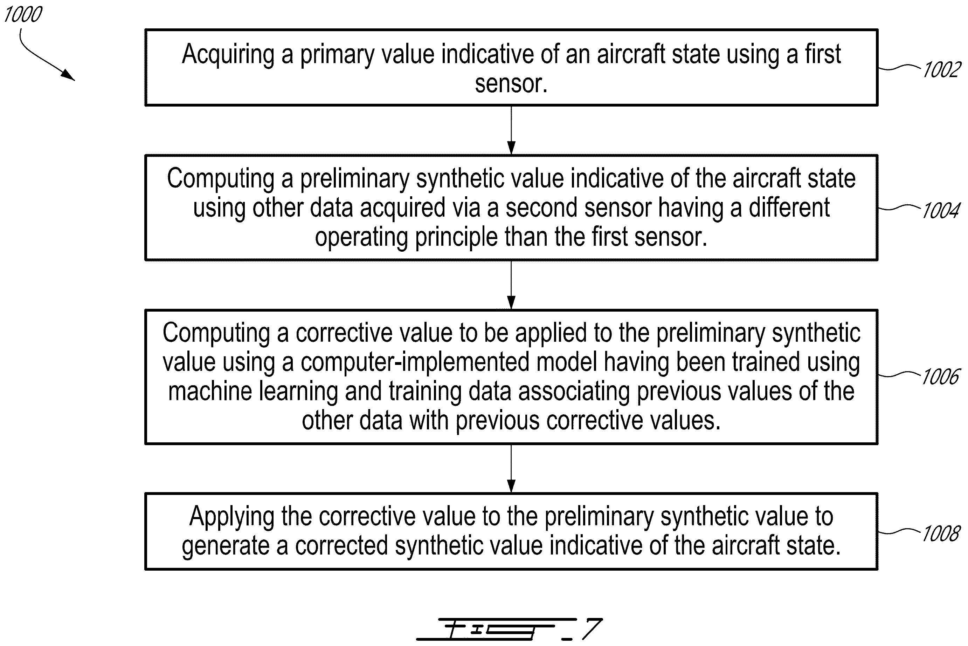

FIG. 7 is a flow diagram of a method 1000 of monitoring a state of aircraft 10 or of another aircraft. Method 1000 may be performed using synthetic data system 35, 135 and/or using another system. For example, machine-readable instructions 52 may be configured to cause computer 28 (e.g., FCC 28B) to perform at least part of method 1000. Method 1000 may include other actions disclosed herein. Method 1000 may be used within FCS 46. Method 1000 may include elements of monitoring system 12, FCS 46 and/or of synthetic data system 35, 135. In various embodiments, method 1000 may include:
acquiring a primary value (e.g., primary data 24) indicative of the aircraft state using a first sensor (e.g., primary sensor 22) (block 1002);
computing a preliminary synthetic value (e.g., preliminary synthetic data 34, 134) indicative of the aircraft state using other data 32 acquired via a second sensor (e.g., other data source 30) having a different operating principle than the first sensor (block 1004);
computing a corrective value (e.g., correction 42, 142B) to be applied to the preliminary synthetic value using a computer-implemented model (e.g., corrector function 40, 140) having been trained using ML and training data associating previous values of other data 32 with previous corrective values (block 1006); and
applying the corrective value to the preliminary synthetic value to generate a corrected synthetic value (e.g., corrected synthetic data 36, 136) indicative of the aircraft state (block 1008).

The primary value may be acquired while the first sensor (e.g., primary sensor 22) is interacting with an air stream outside of aircraft 10. The first sensor may be a pneumatic sensor.

The computer-implemented model (e.g., corrector function 40, 140) may include an ANN. Method 1000 may include, before generating the preliminary synthetic value, training the ANN using the previous values of other data 32 associated with the previous corrective values.

Method 1000 may include: validating the primary value; and after generating the preliminary synthetic value, further training the ANN using ML and a new corrective value that is based on a difference between the primary value and the preliminary synthetic value.

Method 1000 may include, before applying the corrective value to the preliminary synthetic value: determining that the corrective value exceeds a prescribed value; and adjusting the corrective value to the prescribed value (e.g., using limiter 176).

Computing the corrective value may include: identifying a current operating point of aircraft 10 within an operating envelope of aircraft 10; and computing the corrective value based on the current operating point of aircraft 10 within the operating envelope.

The aircraft state may include one or more of the following: an airspeed of aircraft 10; a Mach number at which aircraft 10 is travelling, an angle of attack of aircraft 10, a side slip angle of aircraft 10; a dynamic pressure of air through which aircraft 10 is travelling; a temperature of air through which aircraft 10 is travelling; a pressure altitude of aircraft 10; and a vertical speed of aircraft 10.

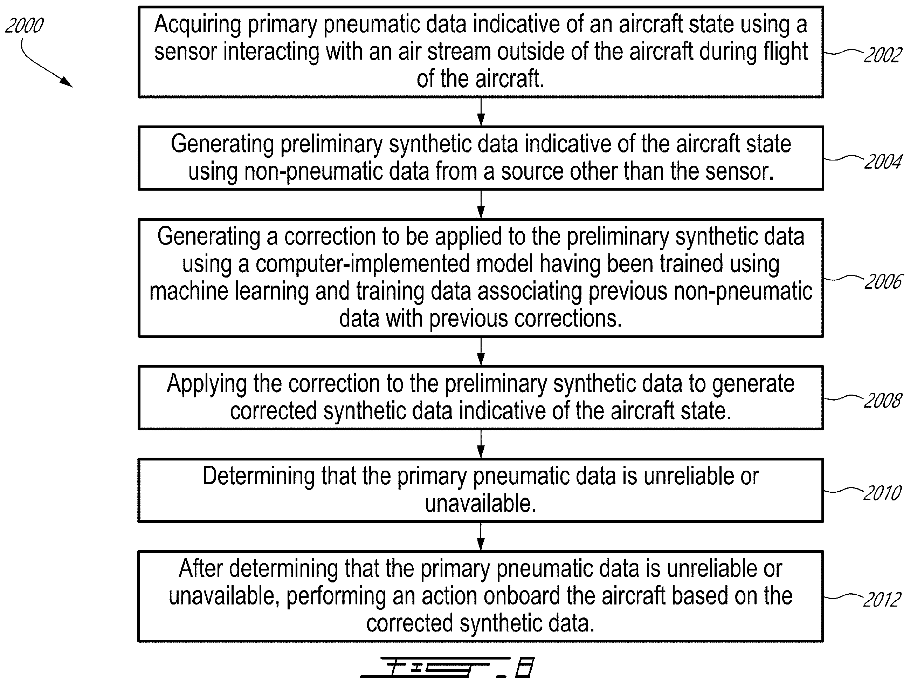

FIG. 8 is a flow diagram of a method 2000 of operating aircraft 10 or another aircraft. Method 2000 may include some or all of method 1000. Method 2000 may be performed using synthetic data system 35, 135, FCS 46 and/or using another system. For example, machine-readable instructions 52 may be configured to cause computer 28 (e.g., FCC 28B) to perform at least part of method 2000. Method 2000 may include other actions disclosed herein. Method 2000 may include elements of monitoring system 12, FCS 46 and/or of synthetic data system 35, 135. In various embodiments, method 2000 may include:
acquiring primary pneumatic data (e.g., primary data 24) indicative of an aircraft state using primary sensor 22 interacting with an air stream outside of aircraft 10 during flight of aircraft 10 (block 2002);
generating preliminary synthetic data 34, 134 indicative of the aircraft state using non-pneumatic data from other data source 30 other than primary sensor 22 (block 2004);
generating correction 42, 142B to be applied to preliminary synthetic data 34, 134 using a computer-implemented model (e.g., corrector function 40, 140) having been trained using ML and training data associating previous non-pneumatic data with previous corrections (block 2006);
applying correction 42, 142B to preliminary synthetic data 34, 134 to generate corrected synthetic data 36, 136 indicative of the aircraft state (block 2008);
determining that the primary pneumatic data is unreliable or unavailable (block 2010); and
after determining that the primary pneumatic data is unreliable or unavailable, performing an action onboard aircraft 10 based on corrected synthetic data 36, 136 (block 2012).

In some embodiments, the action may include controlling one or more flight control surfaces 20 of aircraft 10 either automatically by way of FCS 46 or by way of manual input from the flight crew. In some embodiments, the action may include an adjustment of an actuator onboard of aircraft 10. In some embodiments, the action may include causing corrected synthetic data 36, 136 to be communicated to the flight crew by way of a display device of the flight deck or other annunciator.

Method 2000 may include, before determining that the primary pneumatic data is unreliable or unavailable, controlling flight control surface(s) 20 of aircraft 10 based on the primary pneumatic data.

Method 2000 may include comparing the primary pneumatic data to corrected synthetic data 36, 136 when determining that the primary pneumatic data is unreliable or unavailable.

In some embodiments of method 2000, applying correction 42, 142B to preliminary synthetic data 34, 134 may include adding a corrective value to a synthetic value of preliminary synthetic data 34, 134.

In some embodiments of method 2000, applying correction 42, 142B to preliminary synthetic data 34, 134 may include multiplying a corrective value with a synthetic value of preliminary synthetic data 34, 134.

Method 2000 may include, before applying correction 42, 142B to preliminary synthetic data 34, 134: determining that the corrective value exceeds a prescribed value; and reducing the corrective value (e.g., using limiter 176).

Generating correction 42, 142B may include: using preliminary synthetic data 34, 134 to identify an operating point of aircraft 10 within an operating envelope of aircraft 10; and computing correction 42, 142B based on the operating point within the operating envelope.

The aircraft state may include one or more of the following: an airspeed of aircraft 10; a Mach number at which aircraft 10 is travelling, an angle of attack of aircraft 10, a side slip angle of aircraft 10; a dynamic pressure of air through which aircraft 10 is travelling; a temperature of air through which aircraft 10 is travelling; a pressure altitude of aircraft 10; and a vertical speed of aircraft 10.

Aspects of the present disclosure may be embodied as systems, devices, methods and/or computer program products for estimating a remaining service life of a component of an aircraft engine or for performing other methods described herein. For example, aspects of the present disclosure may take the form of a computer program product embodied in one or more non-transitory computer readable medium(ia) (e.g., memory 50) having computer readable program code (e.g., instructions 52, corrector function 40, 140, estimator function 38, 138 and training algorithm 82) embodied thereon. The program code may be readable and executable by one or more computers (e.g., computer(s) 28, FCC 28B), processor(s) or logic circuit(s) to perform any one of methods 1000 and 2000.

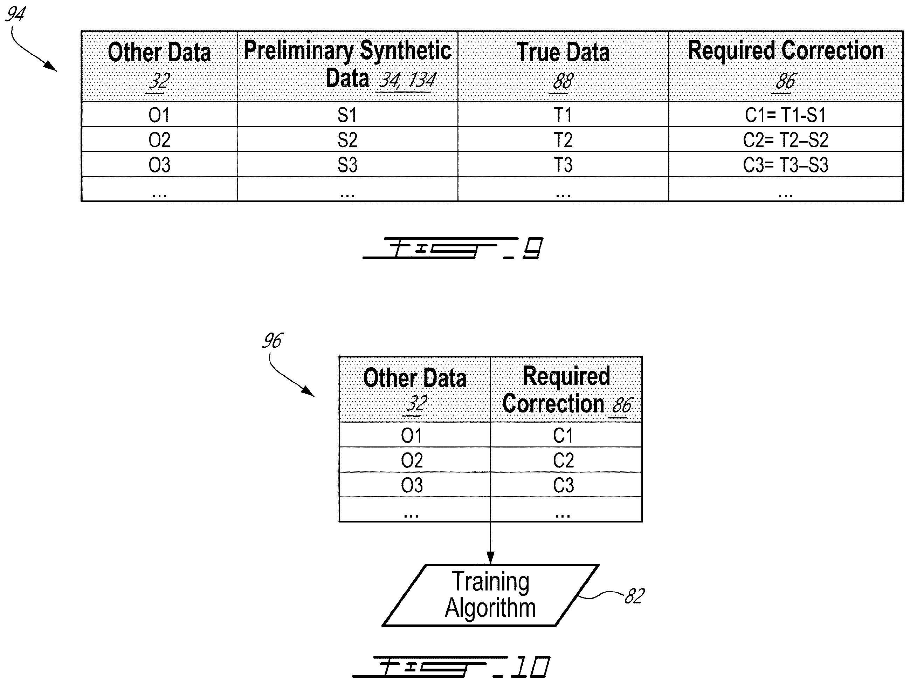

FIG. 9 is a table showing an exemplary data structure 94 illustrating a method of generating ML training dataset 96 (shown in FIG. 10). FIG. 10 is a table showing an exemplary ML training dataset 96 that may be provided to training algorithm 82. In reference to FIG. 5B as well, preliminary synthetic data 134 (e.g., numerical values S1-S3) may be determined with estimator function 138 based on other data 32 (e.g., numerical values O1-O3). Required correction 86 (e.g., numerical values C1-C3) may include a difference in magnitude between preliminary synthetic data 134 (e.g., numerical values S1-S3) and true data 88 (e.g., numerical values T1-T3) so that C1=T1-S1 for example. ML training dataset 96 may include previous (i.e., previously determined) values (e.g., O1, O2, O3...) of other data 32 and corresponding previous (i.e., previously determined) values (e.g., C1, C2, C3...) of required correction 86 to be provided as ML training data to training algorithm 82 to generate ANN parameter(s) 84 and train (e.g., the ANN(s) of) corrector function 140 in an iterative and supervised ML manner.

As can be seen therefore, the examples described above and illustrated are intended to be exemplary only. The scope is indicated by the appended claims.

## Claims

1. A method of operating an aircraft, the method comprising:
acquiring primary pneumatic data indicative of an aircraft state using a sensor interacting with an air stream outside of the aircraft during flight of the aircraft;
generating preliminary synthetic data indicative of the aircraft state using non-pneumatic data from a source other than the sensor;
generating a correction to be applied to the preliminary synthetic data using a computer-implemented model having been trained using machine learning and training data associating previous non-pneumatic data with previous corrections;
applying the correction to the preliminary synthetic data to generate corrected synthetic data indicative of the aircraft state;
determining that the primary pneumatic data is unreliable or unavailable; and
after determining that the primary pneumatic data is unreliable or unavailable, performing an action onboard the aircraft based on the corrected synthetic data.

2. The method as defined in claim 1, wherein the action includes controlling a flight control surface of the aircraft.

3. The method as defined in claim 2, comprising, before determining that the primary pneumatic data is unreliable or unavailable, controlling the flight control surface of the aircraft based on the primary pneumatic data.

4. The method as defined in any one of claims 1 to 3, comprising comparing the primary pneumatic data to the corrected synthetic data when determining that the primary pneumatic data is unreliable or unavailable.

5. The method as defined in any one of claims 1 to 4, wherein the action includes communicating the corrected synthetic data to a flight crew of the aircraft.

6. The method as defined in any one of claims 1 to 5, wherein applying the correction to the preliminary synthetic data includes adding a corrective value to a synthetic value of the preliminary synthetic data.

7. The method as defined in any one of claims 1 to 5, wherein applying the correction to the preliminary synthetic data includes multiplying a corrective value with a synthetic value of the preliminary synthetic data.

8. The method as defined in claim 6 or claim 7, comprising, before applying the correction to the preliminary synthetic data:
determining that the corrective value exceeds a prescribed value; and
adjusting the corrective value to the prescribed value.

9. The method as defined in any one of claims 1 to 8, wherein generating the correction includes:
using the preliminary synthetic data to identify an operating point of the aircraft within an operating envelope of the aircraft; and
computing the correction based on the operating point within the operating envelope.

10. The method as defined in any one of claims 1 to 9, wherein the aircraft state includes an airspeed of the aircraft.

11. The method as defined in any one of claims 1 to 9, wherein the aircraft state includes a Mach number at which the aircraft is travelling.

12. The method as defined in any one of claims 1 to 9, wherein the aircraft state includes an angle of attack of the aircraft.

13. The method as defined in any one of claims 1 to 9, wherein the aircraft state includes a side slip angle of the aircraft.

14. The method as defined in any one of claims 1 to 9, wherein the aircraft state includes a dynamic pressure of air through which the aircraft is travelling.

15. The method as defined in any one of claims 1 to 9, wherein the aircraft state includes a temperature of air through which the aircraft is travelling.
